# FASCICULE DE BREVET EUROPEEN

(11) **EP 3 829 929 B1**
(45) Date de publication et mention de la délivrance du brevet: **26.02.2025**
(21) Numéro de dépôt: 18752701.5
(22) Date de dépôt: 31.07.2018
(51) Int. Cl.: B60R 1/00

(54) **DISPOSITIF DE RÉTROVISION VIDÉO POUR VÉHICULE AUTOMOBILE**
RÜCKBLICKVIDEOVORRICHTUNG FÜR KRAFTFAHRZEUG
REAR-VIEW VIDEO DEVICE FOR MOTOR VEHICLE

(43) Date de publication de la demande: 09.06.2021
(73) Titulaire: DAV, 94046 Créteil Cedex (FR)
(72) Inventeur: DABIC, Stéphanie, 94046 Créteil CEDEX (FR)
(74) Mandataire: Delplanque, Arnaud
(86) Numéro de dépôt international: PCT/EP2018/070801
(87) Numéro de publication internationale: WO 2020/025118

(56) Documents cités:
- WO-A2-2016/024405
- DE-A1- 102010 013 357
- US-A1- 2016 137 129
- US-A1- 2018 118 130

## Description

### DOMAINE TECHNIQUE AUQUEL SE RAPPORTE L'INVENTION

L'invention concerne de manière générale le domaine de la retrovision vidéo pour véhicule automobile.

Elle concerne plus particulièrement un dispositif de retrovision vidéo, pour véhicule automobile, comprenant au moins un moyen de capture d'images configuré pour capturer des images d'une partie de l'environnement à l'extérieur du véhicule automobile, et des moyens d'affichage d'une partie au moins desdites images, représentant une zone d'observation dudit environnement.

Elle concerne également un procédé de pilotage d'un tel dispositif.

### ARRIERE-PLAN TECHNOLOGIQUE

Dans le domaine automobile, la retrovision est traditionnellement assurée par un rétroviseur central et un couple de rétroviseurs latéraux. Cependant, il est connu de remplacer une partie au moins de ces éléments par un dispositif de retrovision vidéo, muni de moyens électroniques, associant des caméras vidéo à un ou plusieurs écrans vidéo disposés à l'intérieur de l'habitacle du véhicule automobile.

L'utilisation de ces dispositifs de retrovision vidéo a permis le remplacement des rétroviseurs traditionnels à miroir, présents à l'extérieur du véhicule automobile, par des caméras vidéo à faible encombrement. L'aérodynamisme des véhicules automobiles a ainsi été amélioré, permettant d'augmenter sensiblement leur autonomie et de réduire de façon significative leur niveau sonore lors de leurs déplacements.

Selon un autre avantage, les optiques des caméras permettent aux conducteurs de surveiller des zones d'observation bien plus étendues d'un paysage situé derrière eux et de supprimer les angles morts des traditionnels rétroviseurs à miroirs. De plus, les logiciels de traitement d'images vidéo permettent d'afficher des images de zones d'observation plus nettes et plus précises, quelles que soient les conditions météorologiques.

Pour cela, les caméras sont rigidement fixées à l'extérieur des véhicules automobiles de manière à ce que leur zone d'observation ne dévie pas au cours du temps : la zone d'observation de la caméra est donc figée. Or, avec un rétroviseur traditionnel, un conducteur est habitué à pouvoir déplacer rapidement et de manière intuitive la zone d'observation, en décalant sa tête, afin de modifier son angle de vision dans le miroir du rétroviseur. Cela n'est pas possible avec les dispositifs de retrovision actuellement proposés.

US 2018/118130 A1, Wo 2016/024405 A2 et US 2016/137129 A1 divulgue des dispositifs de retrovision selon l'art antérieur.

### OBJET DE L'INVENTION

Afin de remédier aux inconvénients précités de l'état de la technique, la présente invention propose un dispositif de retrovision vidéo pour véhicule automobile, dans lequel il est possible de faire varier la zone d'observation affichée par le dispositif, en fonction du comportement du conducteur.

Pour cela, le dispositif de retrovision vidéo comprend au moins un moyen de capture d'images, configuré pour capturer des images d'une partie de l'environnement à l'extérieur du véhicule automobile, et des moyens d'affichage d'une partie au moins desdites images, représentant une zone d'observation dudit environnement. L'invention se caractérise en ce que le dispositif de retrovision comprend en outre des moyens de mesure de la direction du regard du conducteur et des moyens de déplacement de la zone d'observation affichée par les moyens d'affichage, en fonction au moins de la direction mesurée du regard du conducteur.

Lorsqu'un véhicule était équipé d'un rétroviseur à miroir et que le conducteur souhaitait modifier l'angle de vue qu'il avait de l'environnement au travers de ce miroir, il lui suffisait de déplacer légèrement la tête vers la gauche, ou vers la droite, ou en la haussant ou en la baissant.

L'invention propose de piloter le dispositif de retrovision d'une manière similaire, de façon à ajuster la zone d'observation de l'environnement affichée en fonction des mouvements de tête du conducteur.

L'invention permet avantageusement au conducteur d'un véhicule automobile de sélectionner, par un simple regard, le moyen de capture d'images, puis de déplacer la zone d'observation par un simple mouvement de tête. Ainsi, le conducteur n'a pas à chercher la commande de sélection du moyen de capture au niveau du poste de pilotage, commande dont la position peut varier d'un modèle à un autre de véhicule automobile.

De ce fait, l'invention permet à un conducteur familier ou non du véhicule, de sélectionner de façon instinctive le moyen de capture d'image dont il souhaite modifier la zone d'observation, affichée par les moyens d'affichage, pour régler selon ses préférences et rapidement ladite zone d'observation.

Ainsi, le conducteur n'a plus besoin pour cela de retirer une main du volant du véhicule pour effectuer cette opération. C'est pourquoi l'invention propose aussi un dispositif de retrovision plus sûr d'utilisation et accessible à un plus grand nombre de conducteurs, notamment pour les conducteurs ne pouvant utiliser qu'une seule main pour conduire.

D'autres caractéristiques non limitatives et avantageuses du dispositif conforme à l'invention sont les suivantes :
- les moyens de déplacement sont configurés pour déplacer la zone d'observation, affichée par les moyens d'affichage, uniquement lorsque les moyens de mesure détectent que la direction du regard du conducteur est tournée vers les moyens d'affichage ;
- les moyens de mesure sont configurés pour mesurer la position de la tête du conducteur du véhicule automobile et dans lequel les moyens de déplacement sont configurés pour déplacer la zone d'observation en fonction de la position de la tête du conducteur ;
- les moyens de déplacement sont configurés pour déplacer la zone d'observation, affichée par les moyens d'affichage, dans un sens opposé au mouvement de la tête détecté par les moyens de mesure ;
- les moyens de déplacement sont configurés pour déplacer la zone d'observation, affichée par les moyens d'affichage, de façon proportionnelle au mouvement de la tête détecté par les moyens de mesure ;
- il est prévu des moyens d'acquisition et de traitement d'une commande vocale émise par le conducteur et dans lequel les moyens de déplacement sont configurés pour déplacer la zone d'observation, affichée par les moyens d'affichage, en fonction également de ladite commande vocale ;
- les moyens de déplacement comprennent une unité de calcul configurée pour sélectionner, sur chaque image capturée par le moyen de capture d'image, la zone d'observation, et une unité de transmission configurée pour transmettre la zone d'observation aux moyens d'affichage ;
- au moins un support adapté à supporter ledit moyen de capture d'images ;
- les moyens de capture d'image sont montés mobiles sur le support avec au moins un degré de liberté en pivotement, de préférence avec deux degrés de liberté en pivotement, et dans lequel les moyens de déplacement comprennent une motorisation de chaque degré de liberté ;
- le moyen de capture d'images est une caméra vidéo sensible dans le domaine des longueurs d'onde visibles par le conducteur et/ou dans le domaine de l'infrarouge.

L'invention concerne également un procédé de retrovision pour véhicule automobile apte à être conduit par un conducteur, le procédé étant mis en œuvre par l'un des dispositifs décrits ci-dessus et en ce qu'il comprend les étapes successives suivantes :
- identification, par les moyens de mesure, de la direction du regard du conducteur, puis, si le regard du conducteur est tourné vers le moyen d'affichage ;
- identification, par les moyens de mesure, d'un mouvement de la tête du conducteur par rapport aux moyens d'affichage ; et
- déplacement, par les moyens de déplacement, de la zone d'observation affichée par les moyens d'affichage en fonction du mouvement identifié de la tête du conducteur.

Selon une variante de réalisation, il est en outre prévu une étape d'acquisition et de traitement d'une commande vocale émise par le conducteur, et dans lequel, à l'étape de déplacement, la zone d'observation affichée par les moyens d'affichage est déplacée en fonction également de la commande vocale émise par le conducteur.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une représentation schématique d'une vue de dessus d'un dispositif véhicule automobile comprenant un dispositif de retrovision selon un premier mode de réalisation de l'invention ;
- la figure 2 est une représentation schématique d'une vue de face d'un dispositif de retrovision selon le premier mode de réalisation de l'invention ;
- la figure 3 est une représentation schématique d'une vue de dessus du dispositif de retrovision représenté à la figure 2 ;
- la figure 4 est une représentation schématique d'une vue de dessus du dispositif de retrovision représenté à la figure 2, lorsque le conducteur déplace sa tête ;
- la figure 5 est une représentation schématique d'une vue de dessus d'un dispositif de retrovision selon un deuxième mode de réalisation de l'invention ;
- la figure 6 est une représentation schématique d'une vue de face d'un dispositif de retrovision selon un troisième mode de réalisation de l'invention.

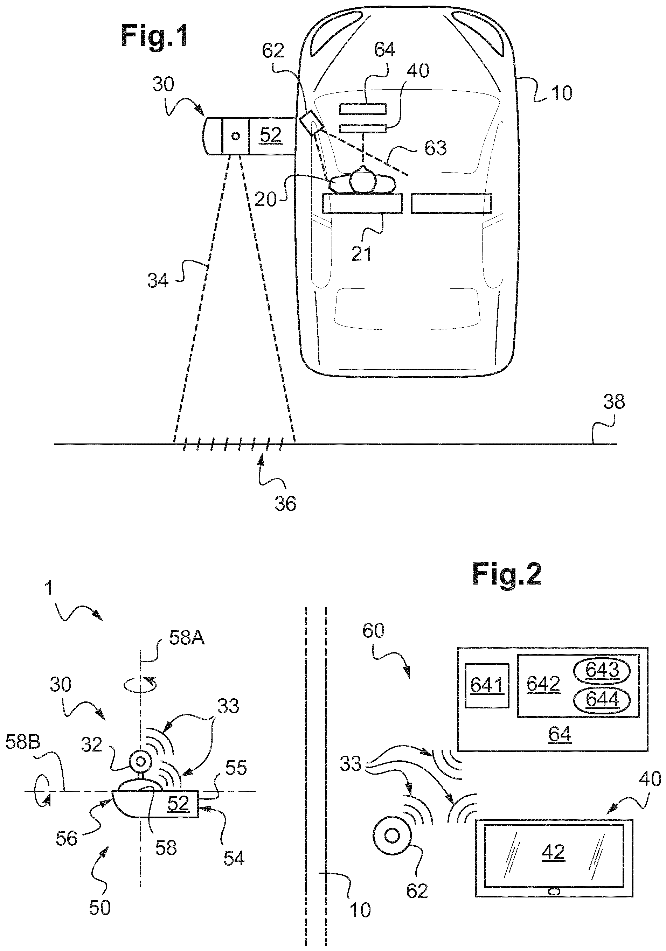

Sur les figures 1 à 3 est représenté un premier exemple de dispositif de retrovision 1 vidéo pour un véhicule automobile 10 qui est apte à être conduit par un conducteur 20.

Le dispositif de retrovision 1 comprend un moyen de capture d'images 30 vidéo, sensible dans le domaine des longueurs d'onde visibles par le conducteur 20. Selon le présent exemple, le moyen de capture d'image est une caméra extérieure 32 vidéo.

La caméra extérieure 32 est connectée à des moyens d'affichage 40, aptes à être embarqués à bord du véhicule automobile 10, pour permettre à son conducteur 20 de visualiser en temps réel les images capturées par la caméra extérieure 32. Par le terme « connecté », on entend ici la possibilité pour deux entités d'échanger des informations, directement ou via un boîtier électronique 64. Les entités peuvent être connectées par une liaison physique comme un ou plusieurs fils conducteurs ou, de préférence, par une liaison sans fil 33 du type « WIFI » ou « Bluetooth » comme représentée sur les figures.

Les moyens d'affichage 40 comprennent par exemple un écran 42. A titre d'exemple, il peut s'agir d'un écran à cristaux liquides (ou LCD pour "Liquid Crystal Display") à transistors en couche mince (ou TFT pour "Thin-Film Transistor").

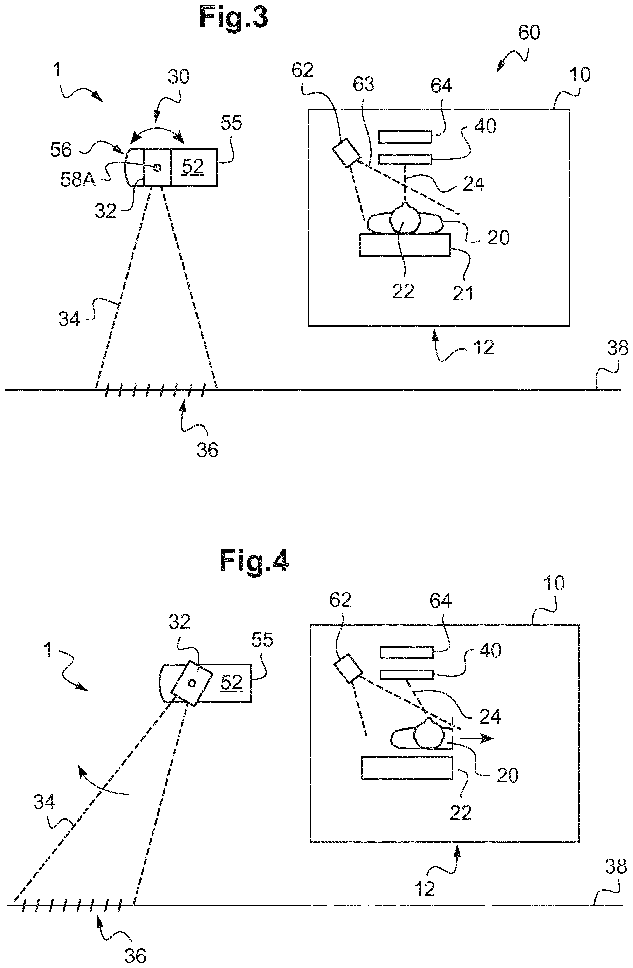

Le dispositif de retrovision 1 comprend également un support 50 adapté à supporter la caméra extérieure 32. Selon le présent exemple représenté à la figure 2, le support 50 comporte un bras 52 comprenant, au niveau d'une première extrémité 54, des moyens de fixation 55 au châssis ou à la carrosserie du véhicule automobile 10. Comme représenté à la figure 3, le bras 52 maintient, au niveau d'une seconde extrémité 56, la caméra extérieure 32 de telle manière qu'elle est orientée vers l'arrière 12 du véhicule pour visualiser une zone d'observation 36 correspondant à une partie de l'environnement 38 située sur le côté et derrière le conducteur 20.

Comme représenté à la figure 2, le support 50 comprend un moyen de pivotement 58 motorisé. Ce moyen de pivotement 58 forme une liaison mécanique configurée pour faire pivoter la caméra extérieure 32 par rapport au bras 52. Ainsi, comme représenté sur les figures 3 et 4, lorsque le bras est fixé sur un véhicule, le moyen de pivotement permet de modifier l'angle de la caméra extérieure 32 de manière à déplacer son champ de vision 34 le long d'une partie de l'environnement 38 situé derrière le conducteur 10. La caméra extérieure 32 peut ainsi capturer des images vidéo correspondant à différentes zones d'observation 36 de l'environnement 38.

Selon le présent exemple illustré à la figure 2, le moyen de pivotement 58 est une liaison mécanique de type rotule, permettant à la caméra extérieure 32 de pivoter autour d'un premier axe 58A vertical et d'un second axe 58B horizontal. De préférence, le bras 52 est fixé sur le véhicule automobile 10 de sorte que les premier et second axes soient normaux ou sensiblement normaux à un axe longitudinal du véhicule. Un axe longitudinal du véhicule s'entend ici comme un axe parallèle ou sensiblement parallèle au déplacement du véhicule selon une trajectoire rectiligne.

Comme représenté à la figure 2, le dispositif de retrovision 1 comprend également des moyens de mesure 60 capables de déterminer la direction du regard du conducteur et la position de la tête du conducteur.

Ici, ces moyens de mesure sont adaptés à filmer le conducteur. Pour cela, les moyens de mesure 60 comprennent une caméra de détection 62. Comme représenté en figure 3, la caméra de détection 62 est orientée vers le haut du siège conducteur 21 de manière à pouvoir filmer, en temps réel, la tête 22 du conducteur 20, notamment lorsque celui-ci regarde l'écran 42.

Selon le présent exemple représenté à la figure 3, le champ de vision 63 de la caméra de détection 62 est suffisamment large pour que la tête 22 du conducteur puisse être filmée indépendamment de la taille ou de la position du conducteur sur le siège conducteur 21. La caméra de détection 62 est connectée à un boîtier électronique 64, par exemple par l'intermédiaire d'une liaison sans fil 33, pour permettre la transmission des images capturées par la caméra audit boîtier.

Comme représenté à la figure 2, le boîtier électronique 64 comprend un calculateur 641 et des moyens de mémorisation 642. Les moyens de mémorisation comprennent un premier logiciel 643 de traitement des images vidéo capturées par la caméra de détection 62. Ce premier logiciel 643 est un logiciel de type reconnaissance facial, permettant de mesurer la direction du regard 24 du conducteur et de détecter lorsque le regard du conducteur est tourné vers l'écran 42. Les moyens de mémorisation 642 comprennent également un deuxième logiciel 644 de type reconnaissance facial, permettant de mesurer le déplacement de la tête 22 du conducteur par rapport à l'écran 42. Le calculateur 641 traite les images vidéo provenant de la caméra de détection 62, à l'aide des logiciels 643 et 644, de façon à pouvoir en temps réel détecter lorsque le conducteur regarde l'écran 42 et mesurer un déplacement de la tête du conducteur vis-à-vis dudit écran.

Le boîtier électronique 64 est connecté, par l'intermédiaire de la liaison sans fil 33, au moyen de pivotement 58 motorisé, de façon à pouvoir commander le pivotement de la caméra extérieure 32 en fonction des mesures réalisées par le calculateur 641 à l'aide des premier et deuxième logiciels. Plus précisément, le calculateur est configuré pour commander au moyen de pivotement 58 motorisé de pivoter l'angle de la caméra extérieure 32 lorsque le conducteur regarde l'écran 42 et qu'il déplace sa tête.

L'objectif est de faire en sorte que l'image affichée sur l'écran 42 soit homologue de celle qui serait vue par le conducteur si le véhicule était équipé de classiques rétroviseurs à miroirs. Plus précisément, l'habitude d'un conducteur étant de hausser la tête pour que l'image de l'environnement qu'il voit au travers d'un miroir se décale vers le bas, l'invention propose de décaler vers le bas la zone d'observation 36 de l'environnement 38 qui est affichée sur l'écran 42 lorsqu'un mouvement de la tête du conducteur vers le haut est détecté.

Pour décaler la zone d'observation 36, on utilise ici la mobilité de la caméra extérieure 32.

Le mouvement de pivotement de la caméra extérieure 32 est de préférence proportionnel et de sens inverse au mouvement de déplacement de la tête du conducteur comme représenté aux figures 3 et 4. Ainsi, le conducteur 20 peut avantageusement régler l'orientation de la caméra extérieure 32 d'un simple mouvement de tête pour que la caméra extérieure 32 pivote et filme une zone d'observation 36 légèrement décalée de l'environnement 38 situé derrière le conducteur. De ce fait, chaque conducteur peut régler rapidement et de façon intuitive la zone observée par la caméra extérieure 32 et affichée par l'écran 42, afin d'améliorer ou changer son angle de vision de l'environnement 38.

Selon l'invention, ce mouvement de la caméra extérieure 32 est commandé à la condition que le conducteur regarde l'écran 42, de façon à éviter des mouvements inutiles de cette caméra.

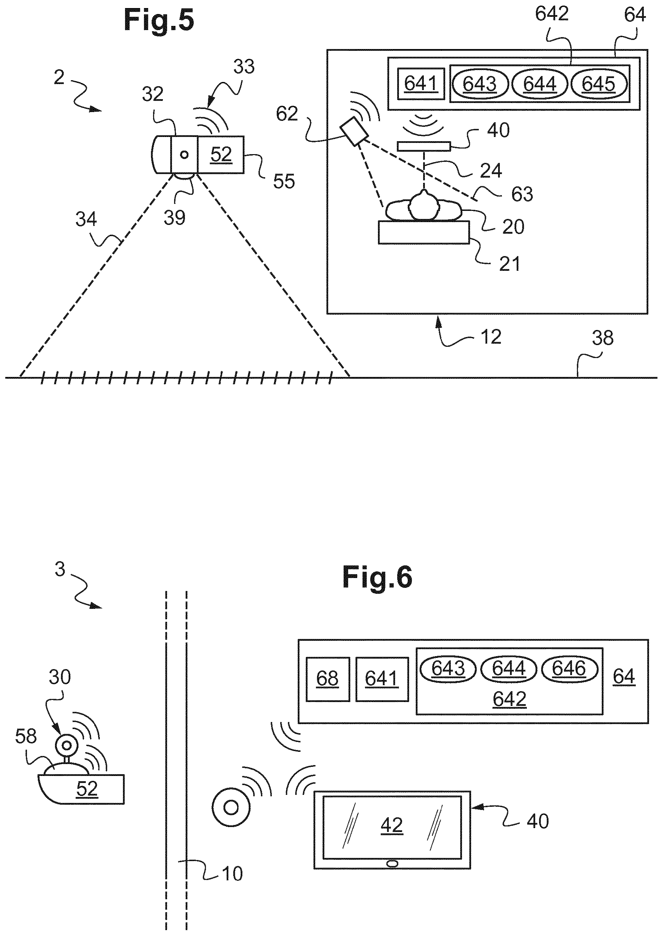

Sur la figure 5 est représenté un deuxième exemple de réalisation d'un dispositif de retrovision 2 vidéo selon l'invention. Ce deuxième exemple se distingue du premier, en ce que le support 50 ne comprend pas de moyen de pivotement 58 motorisé. A la place, la caméra extérieure 32 comporte un objectif 39 grand-angle, de type « type fisheye », permettant à la caméra d'avoir un angle de champ de vision 34 plus large que précédemment. Les images capturées par la caméra extérieure 32 sont transmises au boîtier électronique 64 décrit ci-dessus par l'intermédiaire d'une liaison sans fil 33. Dans ce second mode, les moyens de mémorisation 642 comprennent un troisième logiciel 645 de traitement d'images, configuré pour sélectionner à une partie de chaque image vidéo acquise par la caméra extérieure 32 afin de l'afficher sur l'écran 42, ladite partie correspondant à la « zone d'observation 36 ». La zone d'observation 36 est ensuite transmise à l'écran vidéo 42 par l'intermédiaire de la liaison sans fil 33. Selon l'invention, la zone d'observation 36 peut être déplacée dans chaque image acquise par la caméra extérieure 32 en fonction du mouvement de tête détecté par la caméra de détection 62, lorsque le conducteur regarde l'écran 42. Ce mode de réalisation permet avantageusement de prévenir toute panne affectant le moyen de pivotement 58 motorisé, mentionné dans le premier exemple ci-dessus, afin d'offrir un système plus sûr d'utilisation et plus économique de fabrication.

On notera ici que les deux premiers modes de réalisation pourraient être combinés.

Sur la figure 6 est représenté un troisième exemple de réalisation d'un dispositif de retrovision 3 selon l'invention. Ce troisième exemple se distingue notamment du premier exemple en ce que le boîtier électronique 64 comprend un microphone 68 configuré pour détecter une commande vocale émise par le conducteur et transmettre ladite commande au calculateur 641. La commande vocale est par la suite traitée à l'aide d'un quatrième logiciel 646 de traitement, mémorisé par les moyens de mémorisation 642. Plus précisément, ce quatrième logiciel 646 est configuré pour permettre le pivotement du moyen de pivotement 58 motorisé, en fonction d'une commande vocale émise par le conducteur 20 lorsque le conducteur regarde la caméra extérieure 32.

A titre d'exemple, lorsque le conducteur prononce « rétroviseur à gauche », il est possible de commander le pivotement de la caméra extérieure vers la gauche.

À présent sont présentées différentes variantes de réalisation des modes de réalisation décrits ci-dessus. Chacune de ces variantes peut être combinée avec d'autres variantes afin de former de nouveaux modes de réalisation non explicitement décrits ci-après.

Selon une première variante, la caméra extérieure 32 peut être une caméra vidéo sensible dans le domaine de l'infrarouge afin de notamment permettre une meilleure vision de nuit du paysage se trouvant derrière le conducteur.

Selon une deuxième variante, la caméra de détection 62 peut comprendre un émetteur infrarouge et un récepteur infrarouge sensible aux ondes émises par l'émetteur. L'émetteur est configuré pour envoyer un faisceau infrarouge en direction du conducteur, dont une partie est réfléchie par le visage du conducteur vers le récepteur. L'utilisation de la lumière infrarouge permet de bien repérer la position de la tête et des pupilles du conducteur. À partir des mesures du récepteur, la caméra 62 communique une image infrarouge du visage du conducteur au boîtier électronique 64.

Selon une troisième variante, la caméra de détection 62 peut être intégrée à l'écran 42. Il s'avère ainsi plus facile de savoir si le conducteur regarde ou non en direction de l'écran 42. En variante, la caméra de détection 62 peut être placée au niveau du poste de conduite du véhicule.

Selon une quatrième variante, le boîtier électronique 64 peut être intégré aux moyens d'affichage 40 ou au poste de conduite du véhicule.

Dans les modes de réalisation exposé ci-dessus, le boîtier électronique est distinct des unités électroniques équipant l'écran 42, la caméra extérieure 32 et la caméra de détection 62 et il est adapté à communiquer avec celles-ci. En variante, il pourrait être constitué par l'une et/ou l'autre de ces unités électroniques.

Selon une cinquième variante, un mode de réalisation décrit ci-dessus peut être dupliqué de manière à permettre au conducteur de visualiser plusieurs zones de visualisation d'un même paysage. Pour cela, deux caméras 32 peuvent être disposées de chaque côté du véhicule, à l'image des traditionnels rétroviseurs à miroir présents à l'extérieur d'un véhicule automobile, et à chaque caméra peut être associé un écran 42. Éventuellement, une seule caméra de détection 62 et un seul boîtier électronique 64 peuvent être utilisés pour détecter le regard et un mouvement de tête 22 du conducteur 20 tel que décrit ci-dessus.

La présente invention porte également sur un procédé de retrovision pour véhicule automobile apte à être conduit par un conducteur, le procédé étant mis en œuvre par l'un des dispositifs décrits ci-dessus.

Au cours d'une première étape de mise en œuvre du procédé de retrovision, par le premier exemple de réalisation du dispositif décrit ci-dessus en référence aux figures 1 à 4, les moyens de mesure 60 identifient la direction du regard du conducteur en temps réel, par l'intermédiaire de la caméra de détection 62. Au cours d'une deuxième étape, si le regard du conducteur est tourné vers l'écran 42, les moyens de mesure 60 cherchent à détecter un éventuel mouvement de translation de la tête du conducteur 20 par rapport à l'écran 42. Au cours d'une troisième étape, si un mouvement de tête est détecté, les moyens de mesure 60 commandent le pivotement du moyen de pivotement 58 motorisé dans une direction inverse au mouvement de tête détecté.

Par exemple, lorsque le conducteur décale sa tête latéralement vers sa gauche par rapport à l'écran 42, les moyens de mesure 60 commandent au moyen de pivotement 58 de tourner le champ de vision 34 de la caméra extérieure 32 vers la droite, de manière à déplacer la zone d'observation 36 visible sur l'écran 42 dans un sens opposé au mouvement de tête du conducteur.

Selon un autre exemple, lorsque le conducteur décale sa tête verticalement par rapport à l'écran 42, vers le bas, les moyens de mesure 60 commandent au moyen de pivotement 58 d'élever le champ de vision 34 de la caméra extérieure 32, de manière à déplacer la zone d'observation 36 visible sur l'écran 42 vers le haut.

Au cours d'une quatrième et dernière étape, les moyens de mesure 60 commandent soit l'arrêt du moyen de pivotement 58 lorsque le conducteur détourne son regard de l'écran 42, soit le retour des moyens de pivotement 58 en position initiale.

Dans le cas du deuxième mode de réalisation du dispositif de retrovision décrit ci-dessus en référence à la figure 5, la troisième étape peut être substituée par une étape de sélection par le calculateur 641, d'une partie de chaque image vidéo acquise par la caméra extérieure 32, muni d'un objectif 39 grand-angle, en fonction du mouvement de tête du conducteur.

Par exemple, lorsque le conducteur décale sa tête latéralement vers sa gauche par rapport à l'écran 42, la partie sélectionnée de l'image est décalée vers la droite, de manière à déplacer la zone d'observation 36 visible sur l'écran 42 dans un sens opposé au mouvement de tête du conducteur.

Dans le cas du troisième mode de réalisation décrit ci-dessus, la troisième étape peut être substituée ou complétée par une étape de pivotement du moyen de pivotement 52 motorisé, en fonction de la commande orale émise par le conducteur 20.

Selon un autre mode de réalisation de l'invention, la caméra de détection 62 pourrait être utilisée, au moment du démarrage du véhicule, pour orienter la caméra extérieure 32 dans une direction initiale adaptée au conducteur. Plus précisément, le calculateur pourrait étalonner l'orientation de la caméra extérieure 32 dans une position adaptée au conducteur, au moment où ce dernier regarde pour la première fois en direction de l'écran, compte tenu de la position de la tête du conducteur dans le véhicule.

## Revendications

1. Dispositif de retrovision (1, 2, 3) vidéo pour véhicule automobile (10), comprenant :
- au moins un moyen de capture d'images (30) configuré pour capturer des images d'une partie de l'environnement (38) à l'extérieur du véhicule automobile (10), et
- des moyens d'affichage (40) d'une partie au moins desdites images, représentant une zone d'observation (36) dudit environnement (38),
**caractérisé en ce que** le dispositif de retrovision (1, 2, 3) comprend :
- des moyens de mesure (62, 64) de la direction du regard (24) du conducteur (20), et
- des moyens de déplacement (58, 64) de la zone d'observation (36) affichée par les moyens d'affichage (40) configurés pour déplacer la zone d'observation (36) affichée par les moyens d'affichage (40) uniquement lorsque les moyens de mesure (62, 64) détectent que la direction du regard du conducteur (20) est tournée vers les moyens d'affichage (40).

2. Dispositif de retrovision (1, 2, 3) selon la revendication 1, dans lequel les moyens de mesure (62, 64) sont configurés pour mesurer la position de la tête (22) du conducteur (20) du véhicule automobile (10) et dans lequel les moyens de déplacement (58, 64) sont configurés pour déplacer la zone d'observation (36) en fonction de la position de la tête (22) du conducteur (20).

3. Dispositif de retrovision (1, 2, 3) selon la revendication 2, dans lequel les moyens de déplacement (58, 64) sont configurés pour déplacer la zone d'observation (36), affichée par les moyens d'affichage (40), dans un sens opposé au mouvement de la tête (22) du conducteur détecté par les moyens de mesure (62, 64).

4. Dispositif de retrovision (1, 2, 3) selon la revendication 2 ou 3, dans lequel les moyens de déplacement (58, 64) sont configurés pour déplacer la zone d'observation (36), affichée par les moyens d'affichage (40), de façon proportionnelle au mouvement de la tête (22) du conducteur, détecté par les moyens de mesure (62).

5. Dispositif de retrovision (3) selon l'une des revendications précédentes, dans lequel il est prévu des moyens d'acquisition (68) et de traitement (646) d'une commande vocale émise par le conducteur (20) du véhicule automobile (10) et dans lequel les moyens de déplacement (58, 64) sont configurés pour déplacer la zone d'observation (36), affichée par les moyens d'affichage (40), en fonction également de ladite commande vocale.

6. Dispositif de retrovision (2) selon l'une des revendications précédentes, dans lequel les moyens de déplacement (62, 64) comprennent :
- une unité de calcul (641) configurée pour sélectionner, sur chaque image capturée par le moyen de capture d'images (30), la zone d'observation (36), et
- une unité de transmission configurée pour transmettre la zone d'observation (36) aux moyens d'affichage (40).

7. Dispositif de retrovision (1, 2, 3) selon l'une des revendications précédentes, comprenant au moins un support (50) sur lequel les moyens de capture d'image sont montés mobiles avec au moins un degré de liberté en pivotement, et dans lequel les moyens de déplacement (62, 64) comprennent une motorisation de chaque degré de liberté.

8. Dispositif de retrovision (1, 2, 3) selon l'une des revendications précédentes, dans lequel le moyen de capture d'images est une caméra (32) vidéo sensible dans le domaine des longueurs d'onde visibles par le conducteur du véhicule automobile (10) et/ou dans le domaine de l'infrarouge.

9. Procédé de pilotage d'un dispositif de retrovision (1, 2, 3) qui est conforme à l'une des revendications précédentes, **caractérisé en ce qu'**il comprend les étapes successives suivantes :
- identification, par les moyens de mesure (62, 64), de la direction du regard (24) du conducteur, puis, si le regard du conducteur est tourné vers les moyens d'affichage (40),
- identification, par les moyens de mesure (62, 64), d'un mouvement de la tête (22) du conducteur par rapport aux moyens d'affichage (40), et
- déplacement, par les moyens de déplacement (58, 64), de la zone d'observation (36) affichée par les moyens d'affichage (40) en fonction du mouvement identifié de la tête (22) du conducteur.

10. Procédé de pilotage selon la revendication précédente, dans lequel il est en outre prévu une étape d'acquisition et de traitement d'une commande vocale émise par le conducteur (20), et dans lequel, à l'étape de déplacement, la zone d'observation (36) affichée par les moyens d'affichage (40) est déplacée en fonction également de la commande vocale émise par le conducteur (20).

## Patentansprüche

1. Rückblickvideovorrichtung (1, 2, 3) für ein Kraftfahrzeug (10), beinhaltend:
- mindestens ein Bildaufnahmemittel (30), das dazu konfiguriert ist, Bilder eines Teils der Umgebung (38) außerhalb des Kraftfahrzeugs (10) aufzunehmen, und
- Mittel zum Anzeigen (40) mindestens eines Teils der Bilder, die einen Beobachtungsbereich (36) der Umgebung (38) darstellen,
**dadurch gekennzeichnet, dass** die Rückblickvorrichtung (1, 2, 3) Folgendes beinhaltet:
- Mittel zum Messen (62, 64) der Richtung des Blicks (24) des Fahrers (20) und
- Mittel zum Verstellen (58, 64) des durch die Anzeigemittel (40) angezeigten Beobachtungsbereichs (36), die dazu konfiguriert sind, den durch die Anzeigemittel (40) angezeigten Beobachtungsbereich (36) nur dann zu verstellen, wenn die Messmittel (62, 64) detektieren, dass die Richtung des Blicks des Fahrers (20) auf die Anzeigemittel (40) gerichtet ist.

2. Rückblickvorrichtung (1, 2, 3) nach Anspruch 1, wobei die Messmittel (62, 64) dazu konfiguriert sind, die Position des Kopfes (22) des Fahrers (20) des Kraftfahrzeugs (10) zu messen, und wobei die Verstellmittel (58, 64) dazu konfiguriert sind, den Beobachtungsbereich (36) in Abhängigkeit von der Position des Kopfes (22) des Fahrers (20) zu verstellen.

3. Rückblickvorrichtung (1, 2, 3) nach Anspruch 2, wobei die Verstellmittel (58, 64) dazu konfiguriert sind, den durch die Anzeigemittel (40) angezeigten Beobachtungsbereich (36) in einer zu der durch die Messmittel (62, 64) detektierten Bewegung des Kopfes (22) des Fahrers entgegengesetzten Richtung zu verstellen.

4. Rückblickvorrichtung (1, 2, 3) nach Anspruch 2 oder 3, wobei die Verstellmittel (58, 64) dazu konfiguriert sind, den durch die Anzeigemittel (40) angezeigten Beobachtungsbereich (36) proportional zu der durch die Messmittel (62) detektierten Bewegung des Kopfes (22) des Fahrers zu verstellen.

5. Rückblickvorrichtung (3) nach einem der vorhergehenden Ansprüche, wobei Mittel zur Erfassung (68) und Verarbeitung (646) eines Sprachbefehls, der durch den Fahrer (20) des Kraftfahrzeugs (10) erteilt wird, vorgesehen sind und wobei die Verstellmittel (58, 64) dazu konfiguriert sind, den durch die Anzeigemittel (40) angezeigten Beobachtungsbereich (36) zusätzlich in Abhängigkeit von dem Sprachbefehl zu verstellen.

6. Rückblickvorrichtung (2) nach einem der vorhergehenden Ansprüche, wobei die Verstellmittel (62, 64) Folgendes beinhalten:
- eine Recheneinheit (641), die dazu konfiguriert ist, in jedem durch die Bildaufnahmemittel (30) aufgenommenen Bild den Beobachtungsbereich (36) auszuwählen, und
- eine Übertragungseinheit, die dazu konfiguriert ist, den Beobachtungsbereich (36) an die Anzeigemittel (40) zu übertragen.

7. Rückblickvorrichtung (1, 2, 3) nach einem der vorhergehenden Ansprüche, die mindestens einen Träger (50) beinhaltet, an dem die Bildaufnahmemittel mit mindestens einem Schwenkfreiheitsgrad beweglich montiert sind, und wobei die Verstellmittel (62, 64) eine Motorisierung für jeden Freiheitsgrad beinhalten.

8. Rückblickvorrichtung (1, 2, 3) nach einem der vorhergehenden Ansprüche, wobei das Bildaufnahmemittel eine Videokamera (32) ist, die in dem Bereich der für den Fahrer des Kraftfahrzeugs (10) sichtbaren Wellenlängen und/oder im Infrarotbereich empfindlich ist.

9. Verfahren zur Ansteuerung einer Rückblickvorrichtung (1, 2, 3) nach einem der vorhergehenden Ansprüche, **dadurch gekennzeichnet, dass** es die folgenden aufeinanderfolgenden Schritte beinhaltet:
- Identifizieren, durch die Messmittel (62, 64), der Richtung des Blicks (24) des Fahrers, dann, wenn der Blick des Fahrers auf die Anzeigemittel (40) gerichtet ist,
- Identifizieren, durch die Messmittel (62, 64), einer Bewegung des Kopfes (22) des Fahrers in Bezug auf die Anzeigemittel (40) und
- Verstellen, durch die Verstellmittel (58, 64), des durch die Anzeigemittel (40) angezeigten Beobachtungsbereichs (36) in Abhängigkeit von der identifizierten Bewegung des Kopfes (22) des Fahrers.

10. Verfahren zur Ansteuerung nach dem vorhergehenden Anspruch, bei dem ferner ein Schritt des Erfassens und des Verarbeitens eines durch den Fahrer (20) erteilten Sprachbefehls vorgesehen ist, und wobei während des Schritts des Verstellens der durch die Anzeigemittel (40) angezeigte Beobachtungsbereich (36) zusätzlich in Abhängigkeit von dem durch den Fahrer (20) erteilten Sprachbefehl verstellt wird.

## Claims

1. Video rear-view device (1, 2, 3) for a motor vehicle (10), comprising:
- at least one image capture means (30) configured to capture images of part of the environment (38) outside the motor vehicle (10), and
- display means (40) for displaying at least some of said images, representing an observation area (36) of said environment (38),
**characterized in that** the rear-view device (1, 2, 3) comprises:
- measuring means (62, 64) for measuring the gaze direction (24) of the driver (20), and
- displacement means (58, 64) for displacing the observation area (36) displayed by the display means (40), configured to displace the observation area (36) displayed by the display means (40) only when the measuring means (62, 64) detect that the gaze direction of the driver (20) is directed at the display means (40).

2. Rear-view device (1, 2, 3) according to Claim 1, wherein the measuring means (62, 64) are configured to measure the position of the head (22) of the driver (20) of the motor vehicle (10), and wherein the displacement means (58, 64) are configured to displace the observation area (36) according to the position of the head (22) of the driver (20).

3. Rear-view device (1, 2, 3) according to Claim 2, wherein the displacement means (58, 64) are configured to displace the observation area (36) displayed by the display means (40) in a direction opposite to the movement of the head (22) of the driver as detected by the measuring means (62, 64).

4. Rear-view device (1, 2, 3) according to Claim 2 or 3, wherein the displacement means (58, 64) are configured to displace the observation area (36) displayed by the display means (40) in a manner proportional to the movement of the head (22) of the driver as detected by the measuring means (62).

5. Rear-view device (3) according to one of the preceding claims, wherein provision is made for acquisition means (68) and processing means (646) for acquiring and processing a voice command uttered by the driver (20) of the motor vehicle (10), and wherein the displacement means (58, 64) are configured to displace the observation area (36) displayed by the display means (40) depending on said voice command as well.

6. Rear-view device (2) according to one of the preceding claims, wherein the displacement means (62, 64) comprise:
- a computing unit (641) configured to select the observation area (36) in each image captured by the image capture means (30), and
- a transmission unit configured to transmit the observation area (36) to the display means (40).

7. Rear-view device (1, 2, 3) according to one of the preceding claims, comprising at least one carrier (50) on which the image capture means are mounted so as to be able to move with at least one degree of freedom of pivotal movement, and wherein the displacement means (62, 64) comprise motorization for each degree of freedom.

8. Rear-view device (1, 2, 3) according to one of the preceding claims, wherein the image capture means is a video camera (32) that is sensitive in the wavelength range visible to the driver of the motor vehicle (10) and/or in the infrared range.

9. Method for controlling a rear-view device (1, 2, 3) that is in accordance with one of the preceding claims, **characterized in that** it comprises the following successive steps:
- the measuring means (62, 64) identifying the gaze direction (24) of the driver, and then, if the gaze of the driver is directed at the display means (40),
- the measuring means (62, 64) identifying a movement of the head (22) of the driver with respect to the display means (40), and
- the displacement means (58, 64) displacing the observation area (36) displayed by the display means (40) according to the identified movement of the head (22) of the driver.

10. Control method according to the preceding claim, wherein provision is furthermore made for a step of acquiring and processing a voice command uttered by the driver (20), and wherein, in the displacement step, the observation area (36) displayed by the display means (40) is displaced according to the voice command uttered by the driver (20) as well.
